(19) Europäisches Patentamt
European Patent Office
Office européen des brevets

(11) Veröffentlichungsnummer : **0 157 102**
**B1**

(12) # EUROPÄISCHE PATENTSCHRIFT

(45) Veröffentlichungstag der Patentschrift : **29.07.87**

(51) Int. Cl.⁴ : **C 09 D 5/44**, C 08 G 59/54

(21) Anmeldenummer : **85100924.1**

(22) Anmeldetag : **30.01.85**

(54) **Verfahren zur Herstellung von kathodisch abscheidbaren Lackbindemitteln.**

(30) Priorität : **02.03.84 AT 713/84**

(43) Veröffentlichungstag der Anmeldung : **09.10.85 Patentblatt 85/41**

(45) Bekanntmachung des Hinweises auf die Patenterteilung : **29.07.87 Patentblatt 87/31**

(84) Benannte Vertragsstaaten :
**DE FR GB IT NL SE**

(56) Entgegenhaltungen :
**FR-A- 2 445 354**
**FR-A- 2 495 965**
**GB-A- 1 235 975**
**US-A- 4 421 906**

(73) Patentinhaber : **VIANOVA KUNSTHARZ AKTIENGESELLSCHAFT**
**Postfach 191 Leechgasse 21**
**A-8011 Graz (AT)**

(72) Erfinder : **Schipfer, Rudolf, Dr.**
**Ernst Haeckelstrasse 53**
**A-8010 Graz (AT)**
Erfinder : **Daimer, Wolgang, Dipl. Ing.**
**Rosenberggürtel 37**
**A-8010 Graz (AT)**
Erfinder : **Schmölzer, Gerhard, Dr.**
**Eisteichgasse 37**
**A-8010 Graz (AT)**

(74) Vertreter : **Pitter, Robert, Dr. et al**
**Leechgasse 21 Postfach 191**
**A-8010 Graz (AT)**

EP 0 157 102 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Verfahren zur Herstellung von kathodisch abscheidbaren Lackbindemitteln für das Elektro-Tauchlackierverfahren (ETL-Verfahren) auf der Basis von Epoxidharzen, die durch Carbonsäureamidgruppen enthaltende sekundäre Amine modifiziert sind. Die erfindungsgemäß hergestellten Bindemittel dienen zur Formulierung von ET-Lacken, welche vorzugsweise unter Verwendung geeigneter Härtungskomponenten beim Einbrennen durch Umesterung vernetzbar sind.

Der Erfindung lag die Aufgabenstellung zugrunde, kathodish abscheidbare, vorzugsweise durch Umesterung wärmehärtbare Bindemittel herzustellen, welche eine Verbesserung insbesondere der Zwischenschichthaftung und der Wasserverdünnbarkeit ergeben. Es hat sich gezeigt, daß ihre Strukturen die Eigenschaften von ETL-Bindemitteln im allgemeinen, besonders aber hinsichtlich ihrer Wasserverdünnbarkeit und ihrer haftungsvermittelnden Wirkung gegenüber Folgeschichten verbessern können. Durch die verbesserte Wasserverdünnbarkeit kann der für die Verarbeitung notwendige Neutralisationsgrad erniedrigt werden, was zu einer Verbesserung der Stromausbeute führt. Durch die Verbesserung der Zwischenschichthaftung zu den folgenden Lackschichten werden die vielfach auftretenden Schwierigkeiten bei der Überschichtung von ETL-Grundierungen mit Füllermaterialien, insbesonders aber mit Dichtungsmaterialien, Kitten oder PVC-Plastisolen, wie sie für den Unterbodenschutz bei Fahrzeugkarossen eingesetzt werden, vermieden.

Aus der US-PS 4 274 989 sind kathodisch abscheidbare ETL-Bindemittel bekannt, welche Reaktionsprodukte aus Epoxidharzen oder Epoxidharz-Aminaddukten mit Aminoamidverbindungen aus maleinisierten, langkettigen Fettsäuren und Polyaminen und weiters teilblockierten Polyisocyanaten darstellen. Abgesehen von der Notwendigkeit der Verwendung von Isocyanaten und den damit verbundenen hohen Einbrenntemperaturen von mindestens 175 Grad C ist bei diesem Harzaufbau keine wesentliche Verbesserung der Zwischenschichthaftung, wohl aber eine Einbuße in der Korrosionsfestigkeit, feststellbar. Das gleiche gilt auch für die US-PS 40 36 795, in welcher ähnliche Produkte beschrieben werden.

Ebenso gilt dies auch für andere Vorschläge zur Herstellung kathodisch abscheidbarer Lackbindemittel unter Verwendung von Aminoamiden, die sich von polymeren Fettsäuren ocer Fettsäureaddukten ableiten. In der GB-PS 12 35 975 werden solche Aminoamide partiell mit Epoxidharzen umgesetzt. Abgesehen von der Verwendung der Fettsäurereste enthaltenden Aminoamide weisen die Produkte freie Epoxidgruppen auf. Durch die dadurch bedingten Stabilitätsmängel sind sie für die üblichen Verfahren der Elektrotauchlackierung nicht geeignet.

Die US-PS 44 21 906 beschreibt wäßrige Überzugsmittel, welche durch Mischung von 2 Komponenten, nämlich einem Bisphenol A-Epoxidharz und einem Polyamidopolyamin, erhalten werden. Das Epoxidharz wird partiell mit einem Polyoxyalkylendiamin reagiert und wird dadurch in Wasser emulgierbar. Die zweite Komponente, das Polyamidopolyamin dient als Härterkomponente und ist ein Reaktionsprodukt aus Dimerfettsäuren und einem Polyamin. Diese Literaturstelle betrifft weder nach Protonierung wasserverdünnbare noch für die elektrische Abscheidung geeignete Bindemittel.

In der DE-OS 32 24 864 werden unter anderem β-amidosubstituierte Polyester als Härtungsmittel für Hydroxylgruppen tragende Polymere vorgeschlagen. Soferne die Produkte auch kationische Gruppen aufweisen, können sie auch als Bindemittel für ET-Lacke dienen. Die β-amidosubstituierte Seitenkette wird während der Härtung abgespalten und aus den Überzug verdampft und kann daher nichts zur Haftungsverbesserung von Folgeschichten beitragen.

Selbstvernetzende Harze werden gemäß der US-PS 43 41 676 erhalten, wenn man Polymere, welche primäre oder sekundäre Aminogruppen enthalten im Sinne einer Michael-Reaktion mit N-Methylol (meth) acrylamid umsetzt. Aufgrund der Vernetzungsreaktion ist die Vernetzungsdichte durch die Anzahl der additionsfähigen Aminogruppen beschränkt. Die Anzahl dieser Gruppen soll, wie dem Fachmann bekannt ist, jedoch möglichst niedrig gehalten werden, da sonst andere Eigenschaften, wie die elektrischen Abscheidungsparameter negativ beeinflußt werden.

Es wurde nun gefunden, daß man kationische Bindemittel für die Formulierung von kathodisch abscheidbaren ET-Lacken auf der Basis von Epoxidharz-Aminaddukten, welche Carbonsäureamidgruppen aufweisen, in einfacher Weise durch Verwendung spezifischer sekundärer Amine erhält.

Die Erfindung betrifft demgemäß ein Verfahren zur Herstellung von epoxidgruppenfreien kationischen Kunstharzbindemitteln, welche insbesonders für die Formulierung von Elektrotauchlacken geeignet sind, durch Umsetzung von Epoxidharzen mit sekundären Aminen und gegebenenfalls anderen H-aktiven Verbindungen, dadurch gekennzeichnet, daß man ein Epoxidharz, welches mindestens 2 Epoxidgruppen und ein Epoxidäquivalentgewicht von 190 bis 1 000 aufweist oder Mischungen solcher Epoxidharze bei 20 bis 150 Grad C, gegebenenfalls in Gegenwart reaktionsinerter Lösungsmittel, mit 0,1 bis 1,0 Val Aminogruppen pro verfügbarer Epoxidgruppe eines sekundären Amins der algemeinen Formel

$$R_1 - (CH_2)_n - NH - (CH_2)_n - NH - \overset{\overset{O}{\|}}{C} - (CH_2)_m - OR_2 \qquad (I)$$

oder

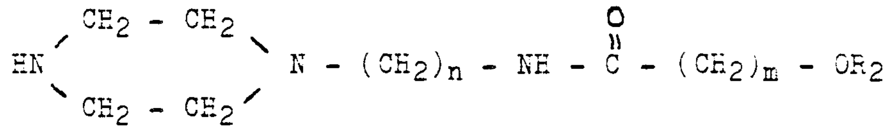 (II)

wobei n = 2 bis 4, m = 1 bis 5 und

$$R_1 = -OH \text{ oder } -NH-\overset{O}{\overset{\|}{C}}-(CH_2)_m-OR_2 ,$$

$$R_2 = -H \text{ oder}$$

$$-CO-NH-R_3-NH-CO-O-(CH_2)_m-CO-NH-$$

$$HO-(CH_2)_n-NH-(CH_2)_n-$$

und $R_3$ = ein aromatischer, cycloaliphatischer oder aliphatischer Kohlenwasserstoffrest, und gegebenenfalls den Rest der verfügbaren Epoxidgruppen vorher, gleichzeitig oder nachher mit einer weiteren H-aktiven Verbindung umsetzt.

Die erfindungsgemäß hergestellten Produkte zeigen auch bei relativ niedrigem Neutralisationsgrad ausgezeichnete Wasserverdünnbarkeit, wodurch die Stromausbeute, d. h. das durch eine gegebene Strommenge abgeschiedene Filmgewicht günstig beeinflußt wird. Ein besonderer Vorteil liegt in der wesentlich verbesserten Zwischenschichthaftung der damit formulierten ET-Lacke, insbesonders auf Plastisol-basierten Deckschichten wie sie für den Unterbodenschutz, als Antidröhnmassen etc. eingesetzt werden. Neben diesen spezifischen Verbesserungen wird auch das gesamte Eingenschaftsbild gegenüber den bekannten Produkten verbessert.

Als Epoxidharze werden bevorzugt solche auf Basis von Bisphenol A (4,4-Bis(hydroxyphenyl)-propan) oder von Phenolnovolaken eingesetzt. Andere Epoxidharze, z. B. auf Basis aliphatischer Di- oder Polyole oder Polyglykole oder epoxidierter Butadienpolymerer, werden vorteilhafterweise in Kombination mit den zuerst genannten verwendet. Im einzelnen sind die für den angestrebten Verwendungszweck geeigneten Epoxidharze dem Fachmann aus der bestehenden umfangreichen Literatur bekannt.

Gemäß dem erfindungsgemäßen Verfahren werden die Epoxidgruppen teilweise mit Carbonsäureamidgruppen tragenden sekundären Aminen umgesetzt. Diese Amine zeigen die allgemeine Formel

$$R_1-(CH_2)_n-NH-(CH_2)_n-NH-\overset{O}{\overset{\|}{C}}-(CH_2)_m-OR_2 \quad (I)$$

oder

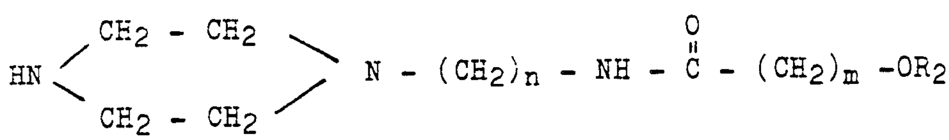 (II)

wobei die Indizes, die im Hauptanspruch angegebene Bedeutung haben.

Diese Amine werden im einfachsten Fall durch Umsetzung der primären Aminogruppen eines Dialkylentriamins oder eines Alkylaminoalkanolamins oder eines entsprechenden Aminoalkylpiperazins mit einem Hydroxymonocarbonsäure-ester oder einem inneren Ester einer solchen Säure (Lacton) erhalten. Das zum Einsatz gelangende Polyamin muß neben einer sekundären Aminogruppe mindestens eine primäre Aminogruppe aufweisen. Als Vertreter dieser verbindungsgruppen seien beispielsweise Diäthylentriamin, Dipropylentriamin, Aminoäthyläthanolamin, Aminopropyläthanolamin oder Aminoäthylpropanolamin genannt. Als Piperazinderivate kommen das Aminoäthyl-, Aminopropyl-bzw. das Aminobutylpiperazin zum Einsatz.

Als Hydroxymonocarbonsäureester bzw. Lactone werden bevorzugt die Monoalkanolester der Glykolsäure (Hydroxyessigsäure) oder der Hydroxypropionsäure sowie gamma-Butyrolacton bzw. epsilon-Caprolacton eingesetzt. Von den Hydroxycarbonsäureestern werden bevorzugt solche mit Alkanolen mit 1 bis 8 C-Atomen eingesetzt. Die bei der Reaktion abgespaltenen Alkanole dienen als Lösungsmittel für das Reaktionsprodukt. Die Umsetzung dieser Komponenten erfolgt unter Aminolyse der Esterbindung bzw. der Lactongruppierung bei 25 bis 100 Grad C. Die Reaktionsprodukte liegen entweder in einer Lösung in dem bei der Reaktion entstandenen Alkohol oder einem für die Reaktion eingesetzten Lösungsmittel, z. B. einem Glykoläther, vor.

Bevorzugte Ausführungsformen sind die Umsetzung von 1 Mol Diäthylentriamin mit 2 Mol Glykolsäurebutylester oder von 1 Mol Aminoäthyläthanolamin mit 1 Mol Glykolsäurebutylester. Anstelle des Glykolsäureesters kann bevorzugt epsilon-Caprolacton eingesetzt werden, wobei dieses vorteilhafterweise in einem 5-10 %igen molaren Überschuß verwendet wird.

Eine besonders günstige Ausführungsform besteht in der Umsetzung von 1 Mol eines Diisocyanates mit 2 Mol Glykolsäureester und anschließender Transamidierung mit 2 Mol Aminoäthyläthanolamin. Als Diisocyanate können aromatische, cycloaliphatische oder aliphatische Diisocyanate eingesetzt werden.

Die für die Verbindungen gefundenen Aminzahlen und Absorptionsspektren stehen im Einklang mit der angenommenen Struktur.

Die Umsetzung des Carbonsäureamidgruppen tragenden sekundären Amins mit dem Epoxidharz erfolgt vorzugsweise in einem reaktionsinerten Lösungsmittel, z. B. einem Glykoläther, bevorzugt dem Monoäthylenglykolmonoäthylmäther oder dem Monopropylenglykolmonomethyläther bei 20 bis 150 Grad C.

Die vorhandenen Epoxidgruppen des Epoxidharzes werden mit dem sekundären Amin in einem Verhältnis umgesetzt, daß pro Val Epoxidgruppen 0,1 bis 1,0 Val NH-Gruppen eingesetzt werden.

Die nicht mit dem sekundären, Carbonsäureamidgruppen tragenden Amin zur Umsetzung gelangenden Epoxidgruppen werden mit anderen H-aktiven Verbindungen umgesetzt, wodurch eine vielfältige Modifikation des Endprodukts möglich ist. So können auf diese Weise in die Harze flexibilisierende und/oder die Glasübergangstemperatur senkende Segmente eingebaut werden. Dazu eignen sich in bekannter Weise monomere, oligomere oder polymere Verbindungen, wie Polyglykole, Polyätherpolyole, Polyesterpolyole, Polycaprolactonpolyole, Mono- oder Dicarbonsäuren, Polyester mit endständigen Carboxylgruppen oder Polybutadienhomo- oder -copolymere mit endständigen Carboxylgruppen. Diese Modifikation wird vorzugsweise vor der Umsetzung mit dem sekundären Amin vorgenommen.

Eine weitere Möglichkeit einer Modifizierung besteht in der Mitverwendung anderer primärer oder sekundärer Monoamine oder vorzugsweise primär-tertiärer Diamine. Durch diese Modifikation wird eine Erhöhung der Basizität erzielt, wodurch eine weitere Verbesserung der Wasserlöslichkeit bzw. des Arbeits-pH-Bereiches resultiert. Neben Alkylaminen, wie Butylamin oder 2-Äthylhexylamin, Diäthylamin, Diäthanolamin usw. werden Diamine vom Typ des N,N-Diäthylpropandiamin-1,3 oder N,N-Dimethylpropandiamin-1,3 eingesetzt. Die Umsetzung mit den zusätzlichen Aminen kann gleichzeitig oder vorzugsweise nach der Reaktion mit dem Carbonsäureamidgruppen tragenden sekundären Amin erfolgen.

Die Umsetzungen des Epoxidharzes mit den verschiedenen Modifikatoren erfolgt bei 20 bis 150 Grad C bis zum gewünschten Epoxidwert. Für das Endprodukt wird ein Epoxidwert von praktisch Null angestrebt.

Zur Formulierung der Lacke werden die Produkte mit Härtungskomponenten wie Aminoharzen, verkappten Isocyanaten oder vorzugsweise polyfunktionellen aktivierten Estern kombiniert. Die letzteren vernetzen mit den erfindungsgemäß hergestellten Harzen unter dem katalytischen Einfluß der tertiären Aminogruppen oder gegebenenfalls zugesetzten Schwermetallkatalysatoren. Beispiele für solche Vernetzungsmittel werden in der EP-A1-00 12 463, der DE-OS 32 24 864 ode der AT-PS 372 099 angegeben.

Die aus den erfindungsgemäß hergestellten Bindemitteln und dem Vernetzungsmittel bestehenden Kombinationen werden — vor oder nach der partiellen Neutralisation mit Säuren — gegebenenfalls in üblicher Weise mit Pigmenten, Füllstoffen und Katalysatoren verarbeitet und mit Wasser auf den gewünschten Festkörpergehalt verdünnt. Neben der bevorzugten Applikationstechnik, dem ETL-Verfahren, können die Lacke auch durch Tauchen, Spritzen, Walzen etc. aufgebracht werden. Die applizierten Filme werden bei 160 bis 180 Grad C 10 bis 30 Minuten eingebrannt.

Die grundsätzlichen Arbeitsweisen bei der Herstellung und Verarbeitung von wasserverdünnbaren Lacken nach den angegebenen Verfahren sind dem Fachmann bekannt und bedürfen keiner besonderen Erläuterung.

Die folgenden Beispiele dienen der näheren Erläuterung der Erfindung, ohne sie in ihrem Umfang zu beschränken. Alle Angaben in Teilen oder Prozenten beziehen sich, soferne nichts anderes angegeben ist, auf Gewichtseinheiten.

Folgende Bestimmungsmethoden werden in den Beispielen verwendet :

| | |
|---|---|
| Aminzahl | gemäß DIN 53 176 |
| Hydroxylzahl | gemäß DIN 53 240 |
| Säurezahl | gemäß DIN 53 402 |
| Festkörpergehalt : | Trockenofen, 30 Minuten bei 120 Grad C |
| Schmelzpunkt : | nach Dr. Tottoli |
| Brechungsindex : | $n_{20}^{D}$ gemäß DIN 53 169 |
| Freies Amin : | gaschromatographisch |

Folgende Abkürzungen werden in den Beispielen benützt :

| | |
|---|---|
| GB-Ester | Glykolsäurebutylester |
| DETA | Diäthylentriamin |

| | |
|---|---|
| AEEA | Aminoäthyläthanolamin |
| AEP | Aminoäthylpiperazin |
| CPL | epsilon -Caprolacton |
| PGME | Propylenglykolmonomethyläther |
| EGL | Äthylenglykolmonoäthyläther |
| TDI | Toluylendiisocyanat (handelsübliches Isomerengemisch) |
| HMDI | Hexamethylendiisocyanat |
| BUGL | Äthylenglykolmonobutyläther |
| EHA | Äthylhexylamin |
| DEPDA | N,N-Diäthylpropandiamin-1,3 |
| DOLA | Diäthanolamin |
| EPH | Epoxidharz |

(A) Herstellung der erfindungsgemäß eingesetzten, Carbonsäureamidgruppen enthaltenden sekundären Amine

Amin A 1 : gemäß allgemeiner Formel (I) :

$n = 2$ ; $m = 1$ ; $R_1 = NH—C(O)—(CH_2)_m—OR_2$ ; $R_2 = —H$.

In einem mit Thermometer, Rührer, Zugabegefäß und Rückflußkühler ausgestatteten Reaktionsgefäß werden 264 g 2 Mol) GB-Ester auf 80 Grad C erwärmt. Bei dieser Temperatur werden innerhalb von 60 Minuten 103 g (1 Mol) DETA zugegeben. Nach Ende der Zugabe wird die Temperatur auf 100 Grad C gesteigert und die Reaktion bis zu einer Aminzahl von 153 mg KOH/g Probe geführt (Reaktionszeit ca. 2 Stunden).

Das Produkt weist einen Festkörpergehalt von 60 % auf und kristallisiert beim Abkühlen. Nach Umkristallisation aus Äthanol zeigt das Produkt einen Schmelzpunkt von 114-2 Grad C. Der Gehalt an freiem Amin (gaschromatisch) liegt unter 0,02 %. IR- und $^1H$-NMR-Spektren bestätigen die angenommene Struktur der Verbindung.

Amin A 2 : gemäß allgemeiner Formel (I) :

$n = 2$ ; $m = 1$ ; $R_1 = OH$ ; $R_2 = H$.

In einem Reaktionsgefäß, wie es oben beschrieben wurde, werden 132 g (1 Mol) GB-Ester auf 30 Grad C erwärmt. Innerhalb einer Stunde werden 104 g (1 Mol) AEEA zugegeben, wobei die Temperatur durch die exotherme Reaktion auf 60 Grad C ansteigt. Die Reaktion wird beendet ween eine Aminzahl von 237 mg KOH/g Probe, ein Brechungsindex von 1,4705-1,4720 und eine Viskosität (DIN 53 211/20 Grad C) von 80 bis 100 Sekunden erreicht sind.

| | |
|---|---|
| Festkörpergehalt : | 60 % |
| Freies Amin : | weniger als 0,06 %. |

Amin A 3 : gemäß allgemeiner Formel (I) :

$n = 2$ ; $m = 5$ ; $R_1 = —NH—CO—(CH_2)_m—OR$ ; $R_2 = H$

103 g (1 Mol) DETA werden auf Grad C erwärmt und innerhalb von 90 Minuten 239 g (2,1 Mol) CPL zugegeben. Die Temperatur wird 2 Stunden bei 40 Grad C gehalten. Anschließend wird die Reaktion bei 60 Grad C bis zu einer Aminzahl von 156 mg KOH/g Probe geführt. Das Reaktionsprodukt wird mit PGME auf einen Festkörpergehalt von 50 % verdünnt. Es kristallisiert in der Kälte. Freies Amin : weniger als 0,02 % ; Schmelzpunkt (nach Umkristallisation aus EGL) : 84-87 Grad C

Amin A 4 : gemäß allgemeiner Formel (I) :

$n = 2$ ; $m = 5$ ; $R_1 = —OH$ ; $R_2 = H$.

Zu 104 g (1 Mol) AEEA werden bei Raumtemperatur innerhalb 1 Stunde 125 g (1,1 Mol) CPL zugegeben und die Temperatur durch Kühlen auf 30 Grad C gehalten. Die Reaktion wird beendet, wenn eine Aminzahl von 254 mg KOH/g Probe, ein Brechungsindex von 1,502 bis 1,510 und eine Viskosität (10 g Probe + 3 g EGL) von O—Q (GARDNER-HOLDT) erreicht ist (3 bis 6 Stunden). Das Produkt erstarrt nach einigen Tagen zu einer wachsartigen - Masse.

| | |
|---|---|
| Festkörpergehalt : | 97 % |
| Hydroxylzahl : | 720 mg KOH/g |
| Freies Amin : | weniger als 0,02 % |

Amin A 5 : gemäß allgemeiner Formel (I) :

$n = 2$ ; $m = 1$ ; $R_1 = OH$ ;

$$R_2 = CO - NH - R_3 - NH - CO - O(CH_2)_m - CO - NH - (CH_2)_n - NH$$
$$HO-(CH_2)_n-$$

$R_3$ = Toluylenrest

264 g (2 Mol) GB-Ester werden auf 60 Grad C erwärmt und innerhalb einer Stunde 174 g (1 Mol) TDI zugegeben. Anschließend wird die Temperatur auf 100 Grad C erhöht und diese Temperatur weitere 2 Stunden gehalten. In weiteren 30 Minuten wird die Temperatur auf 120 Grad C erhöht und die Reaktion bis zu einem NCO-Wert von unter 0,5 % geführt. Dann wird mit 599 g PGME verdünnt und auf 80 Grad C gekühlt.

Innerhalb einer Stunde wird der Ansatz mit 208 g (2 Mol) AEEA versetzt, wobei die Reaktionstemperatur durch Kühlen auf 80 Grad C gehalten wird. Diese Temperatur wird gehalten, bis eine Aminzahl von 90 mg KOH/g Probe und ein Brechungsindex zwischen 1,4610 und 1,4630 erreicht ist.

| | |
|---|---|
| Festkörpergehalt : | 40 % |
| Freies Amin : | unter 0,8 % |
| Viskosität (DIN 53 211/20 Grad C) : | 25 Sekunden |

Amin A 6 : gemäß allgemeiner Formel (I) :

$n = 2$ ; $m = 1$ ; $R_1 = 0H$ ;

$R_2 = —CO—NH—R_3—NH—CO—O—(CH_2)_m—CO—NH—(CH_2)_n—NH—(CH_2)_n—OH$

$R_3$ = ein Hexamethylenrest.

264 g (2 Mol) GB-Ester werden auf 60 Grad C erwärmt und innerhalb 1 Stunde mit 168 g (1 Mol) HMDI versetzt. Anschließend wird auf 100 Grad C erwärmt und die Reaktion bis zu einem NCO-Wert von weniger als 0,5 % geführt. Nach Verdünnen mit 590 g PGME wird auf 80 Grad C gekühlt und innerhalb 1 Stunde bei 80 Grad C, gegebenenfalls unter Kühlen 208 g (2 Mol) AEEA zugegeben. Die Temperatur wird gehalten, bis eine Aminzahl von 91 mg KOH/g Probe erreicht ist. Das Produkt fällt in einer wachsartigen, teils kristallinen Form an.

| | |
|---|---|
| Festkörpergehalt : | 40 % |
| Freies Amin : | weniger als 0,5 % |
| Schmelzbereich : | 132-136 Grad C |

Amin A 7 : gemäß allgemeiner Formel (II) :

$n = 2$, $m = 1$, $R_2 = H$

Zu 129 g (1 Mol) Aminoäthylpiperazin werden bei Raumtemperatur innerhalb von 1 Stunde 185 g (1,4 Mol) GB-Ester zugegeben, wobei die Reaktionstemperatur 40 °C nicht überschreiten soll. Die Temperatur wird weitere 4 bis 6 Stunden gehalten, bis ein Brechungsindex (20 °C) von 1,485-1,489 und eine Aminzahl von 210 mg KOH/g Probe erreicht ist.

| | |
|---|---|
| Festkörpergehalt : | ca 60 % |
| Freies Amin : | weniger als 0,6 % |

Amin A 8 : gemäß allgemeiner Formel (II) :

$n = 2$, $m = 5$, $R_2 = H$

Zu 129 g (1 Mol) Aminoäthylpiperazin werden bei Raumtemperatur 148 g (1,3 Mol) CPL zugegeben und die Temperatur bei 40 °C 6 bis 8 Stunden gehalten. Die Reaktion ist beendet, wenn ein Brechungsindex (20 °C) von 1,510-1,519 und eine Aminzahl von 240 mg KOH/g Probe erreicht ist.

| | |
|---|---|
| Freies Amin : | weniger als 0,8 % |

(B) Herstellung von Modifikatoren

MOD 1 : Carboxylgruppen tragender Polyester. 210 g (0,705 Mol) Rizinusöl, 90 g (0,608 Mol) Phthalsäureanhydrid, 20 g Toluol und 1 g Triäthylamin werden unter Inertgas auf 180 Grad C erhitzt und bis zu einer Säurezahl von 105 bis 120 mg KOH/g Probe reagiert. Bei 165 Grad C werden 90 g (0,672 Mol) Trimethylolpropan, 100 g (0,82 Mol) Benzoesäure, 80 g (0,588 Mol) Pentaerythrit und 100 g (0,602 Mol) Isophthalsäure zugegeben. Die Temperatur wird unter azeotroper Destillation mit Toluol mit einer Geschwindigkeit von 20 Grad C pro Stunde auf 225 Grad C gesteigert. Nach Erreichen von 200 Grad C wird stündlich die Säurezahl bestimmt, bis sie auf einen Wert von 4 mg KOH/g Probe gefallen ist. Das Lösungsmittel wird unter Vakuum entfernt und der Ansatz auf 125 Grad C gekühlt. Die Viskosität (DIN 53 211/20 Grad C) einer 50 %igen Lösung in BUGL beträgt 60-80 Sekunden.

Bei 125 Grad C werden 100 g (0,658 Mol) Tetrahydrophthalsäureanhydrid zugegeben und bei 110 Grad C bis zum Erreichen einer Säurezahl von 50 bis 60 mg KOH/g Probe und einer Viskosität (DIN 53 211/20 Grad C), einer 50 %igen Lösung in BUGL zwischen 80 und 100 Sekunden reagiert. Das Harz

wird mit PGME auf 85 % Festkörpergehält verdünnt.

MOD 2 : Carboxylgruppen tragender Polyester. 408 g (3 Mol) Trimethylolpropan, 292 g (2 Mol) Adipinsäure und 158 g (1 Mol) Isononansäure werden unter Schutzgas auf 130 °C geheizt. Die Temperatur wird dann mit 10 °C pro Stunde auf 230 °C erhöht, wobei das entstandene Reaktionswasser durch azeotrope Destillation mit Toluol entfernt wird. Sobald eine Säurezahl von ca. 4 mg KOH/g Probe erreicht ist, wird das Schleppmittel im Vakuum entfernt und der Ansatz auf 125 °C gekühlt. Die Viskosität einer Lösung aus 91 g Harz und 49 g PGME entspricht einer Auslaufzeit nach DIN 53 211/20 °C von 90 bis 110 Sekunden.

Bei 125 °C werden 152 g (1 Mol) Tetrahydrophthalsäureanhydrid zugegeben und die Reaktion bei 110 °C bis zu einer Säurezahl von 72-77 mg KOH/g Probe und einer Auslaufzeit (DIN 53 211/20 °C ; 84 g Harz + 56 g PGME) von 85-100 Sekunden weitergeführt. Das Harz wird mit PGME auf einen Festkörpergehalt von 80 % verdünnt.

## Beispiel 1

1 520 g (3,2 Epoxidval = E-Val) EPH I (Bisphenol A-Diglycidyläthers : Epoxidäquivalent 475) werden bei 100 Grad C in 275 g EGL gelöst und mit 470 g (0,4 COOH-Val) MOD 1 bei 110 Grad C bis zu einer Säurezahl von weniger als 0,2 mg KOH/g Probe reagiert. Dann werden weitere 135 g EGL und 760 g (4 E-Val) EPH II (Bisphenol-A-Diglycidyläther : Epoxidäquivalent 190) und bei 65 Grad C 734 g (2,0 NH-Val) Amin A 1 zugegeben und die Temperatur langsam auf 80 Grad C gebracht. Nach 1 Stunde beträgt die Viskosität (GARDNER-HOLDT) einer Lösung aus 65 g Probe und 35 g EGL J-K. Nach Kühlen auf 70 Grad C werden 219,3 g (1,7 Mol) EHA und 78 g (0,6 Mol) DEPDA zugegeben und die Temperatur in 2 Stunden wieder auf 120 Grad C gesteigert. Nach 4 stündiger Reaktionszeit bei dieser Temperatur wird der Ansatz mit EGL auf 65 % Festkörpergehalt verdünnt

Aminzahl : 82 mg KOH/g Festharz
Viskosität (GARDNER-HOLDT ; 64 g Probe + 35 g EGL) : L-M

## Beispiel 2

1 520 g (3,2 E-Val) EPH I werden bei 100 Grad C in 274 g EGL gelöst und mit 353 g (0,3 COOH-Val) MOD 1 bei 110 Grad C bis zu einer Säurezahl von weniger als 0,2 mg KOH/g Probe reagiert. Nach Zugabe von 134 g EGL und 760 g (4 E-Val) EPH II wird bei 60 Grad C 472 g (2,0 NH-Val) Amin A 2 zugesetzt. Der Ansatz wird 2 Stunden bei 60 Grad C gerührt. Anschließend wird mit 111 g EGL verdünnt und 219,3 g (1,7 Mol) EHA und 78 g (0,6 Mol) DEPDA zugegeben. In 2,5 Stunden wird die Temperatur für weitere 4 Stunden auf 120 Grad C erhöht. Das Harz wird mit EGL auf 65 % Festkörpergehalt verdünnt.

Aminzahl : 82 mg KOH/g Festharz
Viskosität (GARDNER-HOLDT ; 64 g Probe + 36 g EGL) : M-N

## Beispiel 3

1 283 g (2,7 E-Val) EPH I werden bei 100 Grad C in 226 g EGL gelöst und mit 597 g (0,5 COOH-Val) MOD 1 bis zu einer Säurezahl von weniger als 0,4 mg KOH/g Probe reagiert. Nach Verdünnen mit 229 g EGL werden 380 g (2 E-Val) EPH II und bei 60 Grad C 584 g (0,8 NH-Val) Amin A 3 zugegeben. Innerhalb 1 Stunde wird die Temperatur auf 80 °C erhöht und weitere 2 Stunden gehalten. Die Viskosität (GARDNER HOLDT, 70 g Probe + 30 g EGL) beträgt G-H. Nach Zugabe von 195 g (1,5 Mol) DEPDA steigt die Temperatur durch die exotherme Reaktion auf 90 Grad C. Nach 1 Stunde bei 90 Grad C wird die Temperatur innerhalb von 2 Stunden auf 120 Grad C gesteigert und 4 Stunden bei dieser Temperatur gehalten. Der Ansatz wird dann mit EGL auf 57 % Festkörpergehalt verdünnt.

Aminzahl : 76 mg KOH/g Festharz
Viskosität : (GARDNER-HOLDT, 74 g Probe + 26 g EGL) : I-J

## Beispiel 4

190 g (1 E-Val) EPH II und 1 425 g (3 E-Val) EPH I werden bei 100 Grad C in 652 g EGL gelöst. Nach Kühlen auf 60 Grad C werden 278 g (1,2 NH-Val) Amin A 4 zugegeben und der Ansatz 1 Stunde bei 70 Grad C reagiert. Die Viskosität (GARDNER-HOLDT, 70 g Probe + 30 g EGL) beträgt I-J. Nach Zugabe von 169 g (1,3 Mol) DEPDA wird die Temperatur auf 120 Grad C erhöht und nach 4 Stunden der Ansatz mit EGL auf 65 % Festkörpergehalt verdünnt.

Aminzahl : 98 mg KOH/g Festharz
Viskosität : (GARDNER-HOLDT, 64 g Probe + 36 g EGL) : S-T

## Beispiel 5

1 805 g (3,8 E-Val) EPH I und 342 g (1,8 E-Val) EPH II werden bei 100 Grad C in 417 g EGL gelöst. Bei 60 Grad C werden 872 g (1,4 NH-Val) Amin A 5 zugegeben und die Temperatur auf 80 Grad C gehalten, bis

die Viskosität (GARDNER-HOLDT, 72 g Probe + 28 g EGL) H-I beträgt. Nach Kühlen auf 60 Grad C werden 168 g (1,6 Mol) DOLA zugegeben und nach 1 Stunde Reaktionszeit 143 g (1,1 Mol) DEPDA zugegeben. Durch die exotherme Reaktion wird die Temperatur innerhalb von 2,5 Stunden auf 120 Grad C gesteigert. Nach 4 Stunden wird der Ansatz mit EGL auf 65 % Festkörpergehalt verdünnt.

Aminzahl : 98 mg KOH/g Festharz
Viskosität : (GARDNER-HOLDT, 64 g Probe + 36 g EGL) : O-P

Beispiel 6

In 433 g EGL werden bei 100 Grad C 1 805 g (3,8 E-Val) EPH I gelöst. Nach Kühlen auf 60 Grad C- werden 861 g (1,4 NH-Val) Amin A 6 zugegeben und der Ansatz 2 Stunden bei 70 Grad C reagiert. Anschließend werden 82 g EGL und 342 g (1,8 E-Val) EPH II und bei 60 Grad C 126 g (1,2 Mol) DOLA zugegeben. Nach 2 stündiger Reaktion bei 60 Grad C wird die Temperatur auf 70 Grad C erhöht, 169 g (1,3 Mol) DEPDA zugegeben und weiter 1 Stunde bei 90 Grad C reagiert. Die Reaktion wird während 4 Stunden bei 120 Grad C vervollständigt. Der Ansatz wird mit EGL auf einen Festkörpergehalt von 65 % verdünnt.

Aminzahl : 98 mg KOH/g Festharz
Viskosität : (GARDNER-HOLDT, 56 g Probe + 44 g EGL) S-T

Beispiel 7

1 629 g (3,43 E-Val) EPH I werden in 265 g PGME gelöst und mit 353 g (0,3 COOH-Val) MOD 1 bei 110 °C bis zu einer Säurezahl von weniger als 0,2 mg KOH/g Probe reagiert. Nach Zugabe von 251 g PGME wird auf 60 °C gekühlt und eine Mischung aus 187 g PGME, 565 g (1,8 NH-Val) Amin 7 und 78 g (0,6 Mol) DEPDA innerhalb von 2 Stunden zugegeben. Der Ansatz wird dann weitere 2 Stunden bei 60 °C und anschließend 2 Stunden bei 90 °C gehalten.

Aminzahl : 114 mg KOH/g Festharz
Viskosität : (GARDNER-HOLDT, 60 g Probe + 40 g PGME) : U

Beispiel 8

1 520 g (3,2 E-Val) EPH I werden in 240 g EGL gelöst und bei 110 °C mit 473 g (0,3 COOH-Val) MOD 2 bis zu einer Säurezahl von weniger als 0,2 mg KOH/g Probe reagiert. Nach Zugabe von 142 g EGL werden bei 80 °C 760 g (4,0 E-Val) EPH II und bei 60 °C eine Mischung bestehend aus 116 g EGL, 219,3 g (1,7 Mol) EHA, 522 g (2,0 NH-Val) Amin 7 und 78 g (0,6 Mol) DEPDA innerhalb von 2 Stunden zugegeben. Die Umsetzung wird durch Reaktion bei 60 °C (2 Stunden) und 90 °C (4 Stunden) abgeschlossen.

Aminzahl : 116 mg KOH/g Festharz
Viskosität : (GARDNER-HOLDT, 50 g Probe + 50 g EGL) M-N

Beispiel 9

1 520 g (3,2 E-Val) EPH I werden in 240 g EGL gelöst und bei 110 °C mit 473 g (0,3 COOH-Val) MOD 2 bis zu einer Säurezahl von weniger als 0,2 mg KOH/g Probe reagiert. Nach Zugabe von 1 032 g EGL werden bei 80 °C 760 g (4,0 g E-Val) EPH II und bei 60 °C eine Mischung bestehend aus 117 g EGL, 219,3 g (1,7 Mol) EHA, 508 g (2,0 NH-Val) Amin A 8 und 78 g (0,6 Mol) DEPDA innerhalb von 2 Stunden zugegeben. Der Ansatz wird weitere 2 Stunden bei 60 °C sowie weitere 6 Stunden bei 90 °C gehalten.

Aminzahl : 112 mg KOH/g Festharz
Viskosität : (GARDNER-HOLDT, 60 g Probe + 40 g EGL) K-L

Prüfung der erfindungsgemäß hergestellten Bindemittel

Die gemäß Beispiel 1-9 hergestellten Produkte werden im Verhältnis 80 : 20 (bezogen auf Feststoff) mit einer Vernetzungskomponente (siehe unten) gemischt und nach Zugabe der in TAB 1 angegebenen Menge Ameisensäure mit den Pigmenten und Füllstoffen gemäß nachstehender Rezeptur vermahlen. Nach Zugabe des Katalysators wird der Ansatz mit deionsiertem Wasser auf einen Feststoffgehalt von 16 % verdünnt und 24 Stunden unter Rühren homoginisiert. Entfettete, kaltgewalzte Stahlbleche werden in bekannter Weise elektrobeschichtet, wobei das Blech als Kathode geschaltet ist. Die Trockenfilmstärke beträgt in allen Fällen 18 bis 22 um. Die Prüfergebnisse sind in TAB 1 zusammengefaßt.

Lackansatz :

80 Tle Festharz gemäß Beispiel
20 Tle Vernetzungskomponente (Festharz)
36,5 Tle Titandioxid
20 Tle Aluminiumsilikatpigment
3 Tle Bleisilikatpigment
0,5 Tle Farbruß

0,5 Tle Pb-octoat

Als Vernetzungskomponente wird ein polyfunktioneller Malonsäureester eingesetzt, welcher dem in der AT-PS 372 099 als Komponente B 2 beschriebenen entspricht. Die Komponente ist ein Umesterungsprodukt aus 396 Tlen Malonsäuredimethylester und 134 g Trimethylolpropan.

Durchführung der Prüfungen :

(1) Salzsprühtest ASTM-B 117-64
Einbrennbedingungen : (A) 30 Min/160 Grad C
(B) 20 Min/180 Grad C
(2) Acetontest :
Ein mit Aceton getränkter Wattebausch wird auf das Prüfblech gedrückt. Die angegebenen Werte stellen die Zeit dar, nach welcher der Film mit dem Fingernagel bis zum Blech abkratzbar ist.
(3) Haftfestigkeit :
(3.1) eines säurekatalysierten handelsüblichen Decklackes auf Basis einer Kombination aus einem gesättigten Polyester und einem Melaminharz (Autodecklackqualität) ; Einbrennbedingungen 30 Min/140 Grad C.
Prüfung : Gitterschnitt gemäß DIN 53 151 6 Stunden nach dem Einbrennen.
(3.2) und (3.3) : eines handelsüblichen Automobil-Unterbodenschutzes auf der Basis eines PVC-Plastisols bzw. eines handelsüblichen in der Automobilindustrie eingesetzten Dichtungsmaterials auf Basis eines PVC-Plastisols. Die Materialien werden in einer Stärke von 3 bis 5 mm auf das grundierte Blech aufgetragen und in der Beschichtung nach der vorgeschriebenen Härtung 2 Schnitte mit einem scharfen Messer angebracht, sodaß ein 1 cm breiter Streifen entsteht. Beurteilt wird die Abreißbarkeit dieses Streifens, wobei die Note 1 gute Haftung (der Streifen zerreißt ohne Ablösung) bzw. die Note 5 leichte Ablösung vom Untergrund bedeutet.

Als Vergleichsbeispiel wurde Beispiel 3 der AT-PS 372 099 herangezogen (VGL).
Erklärungen zu TAB 1
N = Arbeitsneutralisation (Millimol Säure/100 g Festharz)
A = Abscheidungsspannung (Volt)
AE = Abscheidungsäquivalent (mg/Cb)
SST = Salzsprühtest

(Siehe Tabelle 1 Seite 10 f.)

Tabelle 1

| | N | pH Wert | A | AE | SST | | Acetontest | | Haftfestigkeit | | |
|---|---|---|---|---|---|---|---|---|---|---|---|
| | | | | | A | B | A | B | 3.1 | 3.2 | 3.3 |
| 1 | 25 | 6,0 | 360 | 42 | 240 | 360 | 90 | 120 | Gt 0 - 1 | 2 | 2 - |
| 2 | 30 | 6,7 | 360 | 36 | 180 | 360 | 90 | 120 | Gt 1 | 1 - 2 | 1 - 2 |
| 3 | 35 | 6,5 | 360 | 48 | 240 | 400 | 85 | 120 | Gt 0 | 1- | 1 |
| 4 | 30 | 7,5 | 300 | 39 | 320 | 360 | 85 | 120 | Gt 1- | 1 - 2 | 1 - 2 |
| 5 | 30 | 6,9 | 390 | 36 | 360 | 500 | 120 | 120 | Gt 0 | 1 | 1 |
| 6 | 25 | 7,1 | 360 | 33 | 360 | 500 | 120 | 120 | Gt 0 | 1 | 1 |
| 7 | 25 | 6,3 | 330 | 35 | 320 | 360 | 100 | 100 | Gt 0 | 1 | 1 |
| 8 | 25 | 6,5 | 360 | 38 | 360 | 400 | 120 | 120 | Gt 1 | 1 - 2 | 1 - 2 |
| 9 | 35 | 6,2 | 300 | 32 | 240 | 320 | 80 | 100 | Gt 0 | 0 - 1 | 2 - |
| VGL | 45 | 6,5 | 360 | 27 | 180 | 320 | 40 | 80 | Gt 4 + | 4 | 4 - 5 |

**Patentansprüche**

1. Verfahren zur Herstellung von epoxidgruppenfreien kationischen Kunstharzbindemitteln, welche insbesonders für die Formulierung von Elektrotauchlacken geeignet sind, durch Umsetzung von Epoxidharzen mit sekundären Aminen und gegebenenfalls anderen H-aktiven Verbindungen, dadurch gekennzeichnet, daß man ein Epoxidharz, welches mindestens 2 Epoxidgruppen und ein Epoxidäquivalentgewicht von 190 bis 1 000 aufweist oder Mischungen solcher Epoxidharze bei 20 bis 150 Grad C, gegebenenfalls in Gegenwart reaktionsinerter Lösungsmittel, mit 0,1 bis 1,0 Val Aminogruppen pro verfügbarer Epoxidgruppe eines sekundären Amins der allgemeinen Formel

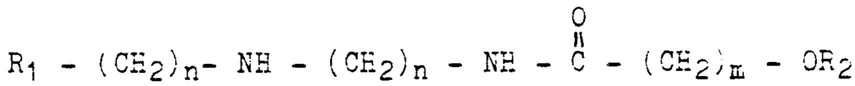

(I)

oder

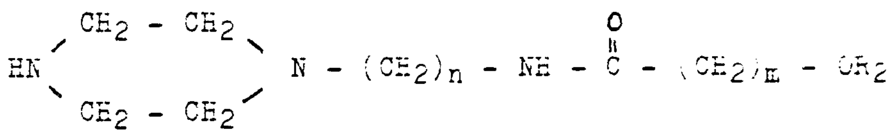

(II)

wobei n = 2 bis 4, m = 1 bis 5 und

$R_1$ = - OH oder 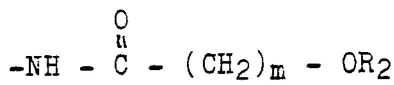 ,

$R_2$ = - H oder

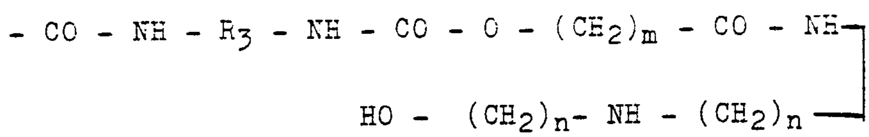

und $R_3$ = ein aromatischer, cycloaliphatischer oder aliphatischer Kohlenwasserstoffrest, und gegebenenfalls den Rest der verfügbaren Epoxidgruppen vorher, gleichzeitig oder nachher mit einer weiteren H-aktiven Verbindung umsetzt.

2. Verfahren nach Anspruch 1, dadurch gekennzeichnet, daß als sekundäre Amine, gemäß der allgemeinen Formel (I), Umsetzungsprodukte aus Dialkylentriaminen und/oder Alkylaminoalkanolaminen mit Hydroxycarbonsäureestern eingesetzt werden.

3. Verfahren nach den Ansprüchen 1 und 2, dadurch gekennzeichnet, daß als Hydroxycarbonsäureester innere Ester (Lactone) solcher Säuren eingesetzt werden.

4. Verfahren nach den Ansprüchen 1 und 2, dadurch gekennzeichnet, daß als Hydroxycarbonsäureester ein Umsetzungsprodukt aus 1 Mol eines Diisocyanates mit 2 Mol Glykolsäureester eingesetzt wird.

5. Verfahren nach den Ansprüchen 1, 2 und 4, dadurch gekennzeichnet, daß als sekundäres Amin ein Transamidierungsprodukt aus dem Esterprodukt gemäß Anspruch 4 mit 2 Mol Aminoäthanolamin eingesetzt wird.

6. Verfahren nach den Ansprüchen 1 bis 5, dadurch gekennzeichnet, daß als zusätzliche H-aktive Verbindungen Hydroxyl- und/oder Carboxylgruppen tragende monomere, oligomere oder polymere Verbindungen eingesetzt werden.

7. Verfahren nach den Ansprüchen 1 bis 6, dadurch gekennzeichnet, daß die Umsetzung mit den H-aktiven Verbindungen gemäß Anspruch 5 vor der Umsetzung mit den sekundären Aminen gemäß Formel (I) erfolgt.

8. Verfahren nach den Ansprüchen 1 bis 5, dadurch gekennzeichnet, daß als zusätzliche H-aktive Verbindungen primäre oder sekundäre Amine, vorzugsweise primär-tertiäre Diamine eingesetzt werden.

9. Verfahren nach den Ansprüchen 1 bis 5 und 8, dadurch gekennzeichnet, daß die Umsetzung mit den H-aktiven Verbindungen gemäß Anspruch 8 gleichzeitig oder vorzugsweise nach der Umsetzung mit den sekundären Aminen gemäß Formel (I) und (II) erfolgt.

**Claims**

1. Process for producing epoxy group free cationic synthetic resin binders which are particularly suited for the formulation of ED paints through reaction of epoxy resins with secondary amines and optionally other hydrogen active compounds, characterised in that an epoxy resin carrying at least 2

epoxy groups and having an epoxy equivalent of 190 to 1 000 or mixtures of such epoxy resins are reacted at 20 to 150 °C, optionally in the presence of inert solvents, with 0.1 to 1.0 Val amino groups per available epoxy group of a secondary amine of the general formula

$$R_1 - (CH_2)_n - NH - (CH_2)_n - NH - \overset{O}{\overset{\|}{C}} - (CH_2)_m - OR_2 \qquad (I)$$

or

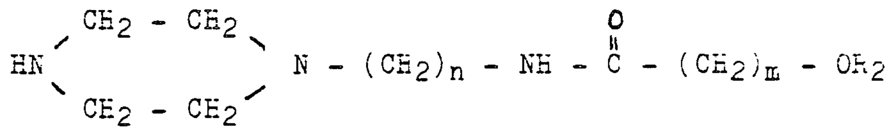

(II)

wherein n = 2-4, m = 1-5,

$$R_1 = -OH \text{ or } -NH - \overset{O}{\overset{\|}{C}} - (CH_2)_m - OR_2 \text{ ,}$$

$$R_2 = -H \text{ or}$$

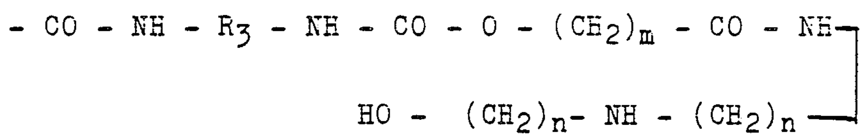

$R_3$ = an aromatic, cycloaliphatic or aliphatic hydrocarbon radical, and optionally the remaining rest of available epoxy groups is reacted before, simultaneously or afterwards with a further hydrogen-active compound.

2. Process according to claim 1, characterised in that as secondary amines according to general formula (I) reaction products of dialkylene triamines and/or alkylaminoalkanol amines with hydroxy carboxylic acid esters are used.

3. Process according to claims 1 and 2, characterised in that as hydroxy carboxylic acid esters inner esters (lactones) of such acids are used.

4. Process according to claims 1 and 2, characterised in that as hydroxycarboxylic acid ester a reaction product of 1 mole of a diisocyanate with 2 moles of glycolic acid ester is used.

5. Process according to claims 1, 2 and 4, characterised in that as secondary amine a transamidation product of the ester product according to claim 4, with 2 moles of aminoethylethanolamine is used.

6. Process according to claims 1 to 5, characterised in that as additional hydrogen-active compounds hydroxy and/or carboxy group containing monomeric, oligomeric or polymeric compounds are used.

7. Process according to claims 1 to 6, characterised in that the reaction with the hydrogen-active compounds according to claim 6 is carried out prior to the reaction with secondary amines according to formula (I) and (II).

8. Process according to claims 1 to 5, characterised in that as additional hydrogen-active compounds primary or secondary amines, preferably primary/tertiary diamines are used.

9. Process according to claims 1 to 5 and 8, characterised in that the reaction with the hydrogen-active compounds according to claim 8 is carried out simultaneously or, preferably, after the reaction with the secondary amines according to formula (I) and (II).

**Revendications**

1. Procédé destiné à la préparation de liants de résines synthétiques cationiques exemptes de groupes époxy, qui conviennent particulièrement à la formulation de peintures électrophorétiques, par réaction de résines époxydes avec des amines secondaires et éventuellement avec d'autres composés à hydrogène actif, caractérisé en ce que l'on fait réagir une résine époxyde qui présente au moins deux groupes époxy et un poids équivalent d'époxy de 190 à 1 000 ou des mélanges de ces résines époxydes à une température de 20 à 150 °C, éventuellement en présence de solvants inertes à la réaction, avec 0,1 à 1,0 Val de groupes amino par groupe époxy disponible d'une amine secondaire de formule générale

$$R_1 - (CH_2)_n - NH - (CH_2)_n - NH - \overset{O}{\overset{\|}{C}} - (CH_2)_m - OR_2 \qquad (I)$$

ou

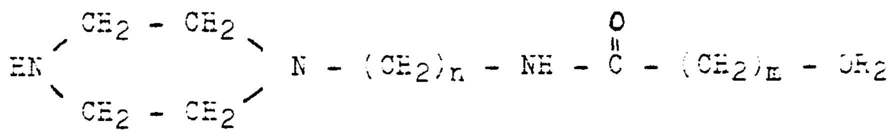

(II)

dans laquelle n = 2 à 4 ; m = 1 à 5 et

$$R_1 \quad = -OH \quad \text{ou} \quad -NH - \overset{O}{\overset{\|}{C}} - (CH_2)_m - OR_2 \; ,$$

$$R_2 \quad = -H \quad \text{ou}$$

$$- CO - NH - R_3 - NH - CO - O - (CH_2)_m - CO - NH -$$

$$HO - (CH_2)_n - NH - (CH_2)_n -$$

et $R_3$ = un radical hydrocarbure aromatique, cycloaliphatique ou aliphatique, et éventuellement on fait réagir le radical des groupes époxy disponibles préalablement, simultanément ou subséquemment avec un autre composé à hydrogène actif.

2. Procédé selon la revendication 1, caractérisé en ce qu'en tant qu'amines secondaires, selon la formule générale (I), on met en œuvre des produits réactionnels obtenus à partir de diacoylènes-triamines et/ou d'alcoylaminoalcanolamines avec des esters de l'acide hydroxycarboxylique.

3. Procédé selon les revendications 1 et 2, caractérisé en ce qu'en tant qu'esters de l'acide hydroxycarboxylique, on met en œuvre des esters intérieurs (lactones) de ces acides.

4. Procédé selon les revendications 1 et 2, caractérisé en ce qu'en tant qu'esters de l'acide hydroxycarboxylique, on met en œuvre un produit réactionnel obtenu à partir d'un mole d'un diisocyanate avec 2 moles d'ester de l'acide glycolique.

5. Procédé selon les revendications 1, 2 et 4, caractérisé en ce qu'en tant qu'amine secondaire on met en œuvre un produit de transamidification obtenu à partir du produit ester selon la revendication 4 avec 2 moles d'aminoéthanolamine.

6. Procédé selon les revendications 1 à 5, caractérisé en ce qu'en tant que composés supplémentaires à hydrogène actif, on met en œuvre des composés monomères, oligomères ou polymères porteurs de groupes hydroxyle et/ou carboxyle.

7. Procédé selon les revendications 1 à 6, caractérisé en ce que la réaction s'effectue avec les composés à hydrogène actif selon la revendication 5 avant la réaction avec les amines secondaires selon la formule (I).

8. Procédé selon les revendications 1 à 5, caractérisé en ce qu'en tant que composés supplémentaires à hydrogène actif, on met en œuvre des amines primaires ou secondaires, de préférence des diamines primaires-tertiaires.

9. Procédé selon les revendications 1 à 5 et 8, caractérisé en ce que la réaction avec les composés à hydrogène actif selon la revendication 8 s'effectue simultanément ou de préférence après la réaction avec les amines secondaires selon la formule (I) et (II).